# EUROPÄISCHE PATENTSCHRIFT

(11) **EP 1 967 783 B1**
(45) Veröffentlichungstag und Bekanntmachung des Hinweises auf die Patenterteilung: **06.10.2010**
(21) Anmeldenummer: 08003773.2
(22) Anmeldetag: 29.02.2008
(51) Int. Cl.: F16L 55/033

(54) **Flexibles Leitungselement**
Flexible conductive element
Elément de conduite flexible

(30) Priorität: 09.03.2007 DE 202007003592 U
(43) Veröffentlichungstag der Anmeldung: 10.09.2008
(73) Patentinhaber: Witzenmann GmbH, 75175 Pforzheim (DE)
(72) Erfinder: Hasenfuss, Nicole, 75179 Pforzheim (DE); Hornung, Jörg, 75248 Ölbronn-Dürrn (DE); Knape, Hendrik, 76227 Karlsruhe (DE); Martinek, Frank, 71665 Vaihingen/Enz 5 (DE); Pluschke, Michael, 75305 Neuenbürg (DE); Weinbrecht, Wolfgang, 74081 Heilbronn (DE)
(74) Vertreter: Lemcke, Brommer & Partner

(56) Entgegenhaltungen:
- EP-A- 0 771 992
- EP-A- 1 431 538
- EP-A- 1 908 936
- CH-A5- 654 092
- DE-A1- 4 220 789

## Beschreibung

Die Erfindung betrifft ein flexibles Leitungselement zum Transport von gasförmigen Medien und insbesondere für Abgasanlagen von Kraftfahrzeugen, zumindest bestehend aus einem gewellten Balg aus Metall und einem koaxial zum Balg auf dessen radialer Außenseite angeordneten ringförmigen Dämpfungselement, das sich nur über einen axialen Teilbereich des Balgs erstreckt.

Im Stand der Technik ist es bekannt, Bälge mit Hilfe von Drahtpressringen zu bedämpfen, um dadurch das Schwingungsverhalten des Balgs so abzuändern, dass entweder Schwingungsspitzen abgemildert werden oder eine Verstimmung des Balgs erzielt wird, was beispielsweise zur Veränderung der Schwingung aus einem Resonanzfrequenzbereich heraus durchgeführt wird. Hierzu sind die Drahtpressringe mit einem lichten Innendurchmesser ausgeführt, der etwas kleiner ist als der lichte Außendurchmesser des Balgs, so dass der Drahtpressring unter Vorspannung auf den äußeren Wellenbergen des Balgs aufliegt und so durch die Vorspannung der Drahtpressringe am Balg festgelegt wird.

Wenn jedoch der Drahtpressring gegenüber dem Balg verrutscht, so ändert sich hierdurch natürlich das Schwingungsverhalten des Balgs in einer nicht gewünschten unkontrollierbaren Art und Weise. Im Extremfall kann der Drahtpressring sogar ganz vom Balg herunterrutschen und die ihm zugeschriebene Funktion gar nicht mehr ausfüllen.

Alternativ schlägt die EP 0 771 992 A1 vor, an der Außenseite eines Wellschlauchs einen Ring aus einem vorzugsweise elastischen, nicht-metallischen Werkstoff vorzusehen. Beim Gegenstand der EP 1 908 936 A1 sorgt ein ringförmiges Federmittel dafür, dass ein äußerer Gestrickemantel im Bereich von Balgwellen verminderter Höhe an dem Balg anliegt. In beiden Fällen fehlt jedoch eine Verliersicherung in axialer Richtung für das Ringelement.

Hiervon ausgehend liegt der vorliegenden Erfindung die Aufgabe zugrunde, ein flexibles Leitungselement der eingangs genannten Art zur Verfügung zu stellen, das sich durch eine ausreichende Bedämpfung des Balgs über einen wesentlichen Teil der Lebensdauer des Balgs auszeichnet. Diese Aufgabe wird erfindungsgemäß durch ein flexibles Leitungselement mit den Merkmalen von Anspruch 1 gelöst. Hiernach ist das ringförmige Dämpfungselement in Form eines Drahtpressrings bezogen auf die Axialrichtung des Balgs verliersicher am Balg gehalten, so dass es dauerhaft an der ihm zugedachten Position verbleibt und dort sicher die Funktion ausführen kann, die ihm zugeschrieben ist.

Zweckmäßigerweise ist das Dämpfungselement, das erfindungsgemäß aus einem Drahtpressring besteht, nicht nur kraftschlüssig, sondern formschlüssig und insbesondere durch an der radialen Außenseite des Balgs vorgesehene bewegungsbegrenzende Halteelemente gehalten, wobei es sich empfiehlt, dass der axiale Abstand der Halteelemente größer ist als die axiale Länge des Dämpfungselements, um dem Dämpfungselement in Axialrichtung ein gewisses Spiel (z. B. in der Größe einer Wellenlänge) zur Verfügung zu stellen. Innerhalb dieses von den als Anschlägen fungierenden Halteelementen begrenzten Axialbereiches kann sich dann das Dämpfungselement bewegen, wobei der Bereich natürlich so gewählt sein sollte, dass das Dämpfungselement in allen ihm möglichen Positionen eine ausreichende Bedämpfung des Balgs hervorrufen kann.

Die Halteelemente können beispielsweise aus zusätzlichen, den Balg auf seiner radialen Außenseite beaufschlagenden und in Radialrichtung nach außen vorstehenden Ringelementen bestehen, insbesondere aus Seegerringen. Diese Seegerringe müssen ganz einfach von außen auf den Balg - vorzugsweise im Bereich eines Wellentals - aufgesteckt werden und können so als der gewünschte Axialanschlag für das Dämpfungselement dienen. Sollte einmal ein Seegerring beschädigt werden bzw. verloren gehen, so kann er problemlos auch nachträglich wieder an den gewünschten Position ersetzt werden.

Ebenso ist es möglich, dass die Halteelemente aus in Radialrichtung gegenüber den benachbarten, vom Dämpfungselement beaufschlagten Balgwellen vorstehenden Balgwellen gebildet sind. Hierbei bietet also der Balg selbst den Axialanschlag für das Dämpfungselement, indem eine Welle einen so großen Außendurchmesser aufweist, dass das Dämpfungselement nicht über diese Welle hinweg verrutschen kann.

Schließlich besteht noch die Möglichkeit, dass eines der beiden Halteelemente für das Dämpfungselement aus einem das Balgende beaufschlagenden Endring oder einer Endhülse besteht, die ähnlich wie die vorstehend erwähnten Ringelemente auf der Balgaußenseite angeordnet werden, wobei die Endringe bzw. Endhülsen größtenteils im Bereich zylinderförmiger Anschlussenden des Balgs positioniert werden und sich so bis in den gewellten Bereich des Balgs hineinerstrecken können, dass sie den gewünschten Axialanschlag für das Dämpfungselement bilden.

Weitere Merkmale und Vorteile der vorliegenden Erfindung ergeben sich aus der nachfolgenden Beschreibung von Ausführungsbeispielen anhand der Zeichnungen; hierbei zeigen
- Figur 1: ein erfindungsgemäßes flexibles Leitungselement in teilweise geschnittener Seitenansicht;
- Figur 2: eine alternative Ausführungsform eines flexiblen Leitungselements im Axialschnitt;
- Figur 3: eine weitere alternative Ausführungsform eines flexiblen Leitungselements gemäß der vorliegenden Erfindung im Axialschnitt;
- Figur 4: eine alternative Ausführungsform eines flexiblen Leitungselements mit aufgesteckten Ringelementen in teilweise geschnittener Seitenansicht; und
- Figur 5: eine weitere Ausführungsform eines flexiblen Leitungselements mit Endhülse in teilweise geschnittener Seitenansicht.

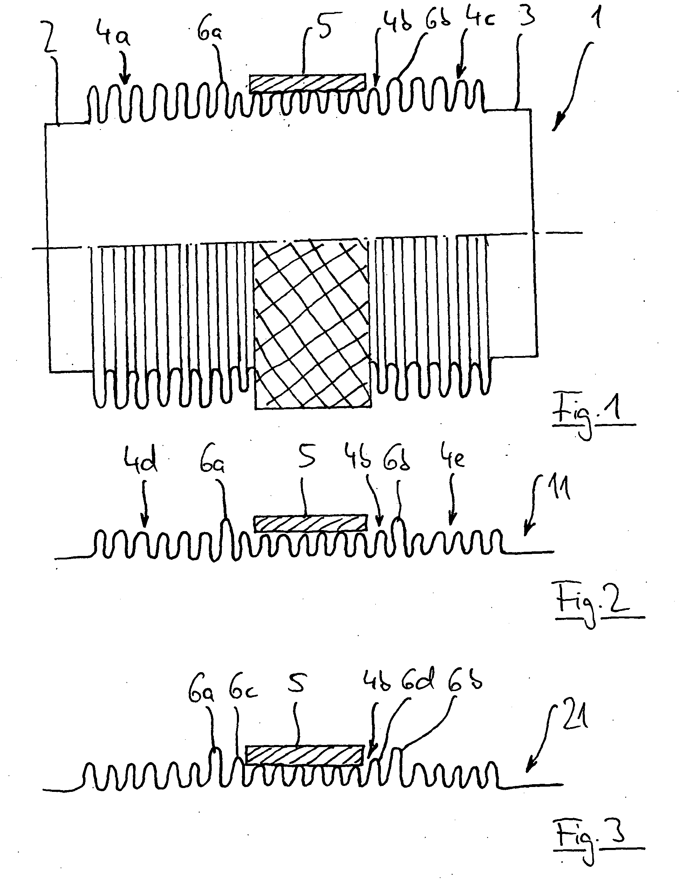

In Figur 1 ist ein Balg 1 dargestellt mit zwei zylindrischen Anschlussenden 2, 3 und einem mittleren gewellten Bereich 4. Der mittlere gewellte Bereich 4 weist zwei in Axialrichtung äußere Bereiche 4a, 4c auf mit einem vergrößerten lichten Außendurchmesser sowie einen mittleren Bereich 4b mit einem demgegenüber reduzierten Außendurchmesser, wohingegen der radiale Innendurchmesser aller Wellen der Bereiche 4a, 4b und 4c gleich ausfällt und im wesentlichen dem Innendurchmesser der zylinderförmigen Balganschlussenden 2, 3 entspricht. Im Bereich 4b mit reduziertem Außendurchmesser der Wellenberge, der sich über insgesamt acht Wellenberge im Beispiel gemäß Figur 1 erstreckt, ist ein Dämpfungselement 5 in Form eines Drahtpressrings vorgesehen, das zwischen den beiden Bereichen 4a, 4c mit vergrößertem Außendurchmesser der Wellenberge gehalten ist. Hierbei sind jeweils die zum Bereich 4b mit reduziertem Außendurchmesser benachbarten Wellenberge 6a, 6b entscheidend, die einen Axialanschlag für das Dämpfungselement dadurch bilden, dass ihr Außendurchmesser so groß ist, dass das Dämpfungselement nicht über den Wellenberg 6a, 6b hinweg in Axialrichtung verschoben werden kann.

Figur 2 zeigt eine Variante dieser Ausführungsform gemäß Figur 1 mit derselben Wirkung, jedoch unterschiedlichem Aussehen: Axial benachbart zu dem mittleren Bereich 4b mit reduziertem Außendurchmesser sind bei einem Balg 11 wieder zwei Wellenberge 6a, 6b mit demgegenüber vergrößertem Außendurchmesser, die den Axialanschlag für das Dämpfungselement 5 bilden. Jedoch sind diese beiden Wellenberge 6a, 6b die einzigen Wellen mit vergrößertem Außendurchmesser und axial benachbart auf der dem Dämpfungselement 5 abgewandten Seite folgen jeweils Bereiche 4d, 4e mit reduziertem Außendurchmesser, der etwa dem Außendurchmesser im Bereich 4b entspricht.

Figur 3 schließlich zeigt eine Figur 2 sehr ähnliche alternative Ausführungsform eines Balgs 21, wobei jedoch zwischen den acht Wellen zwischen den Wellen 6a, 6b mit vergrößertem Außendurchmesser äußere Wellen 6c, 6d vorgesehen sind, die einen Außendurchmesser aufweisen, der größer ist als derjenige der Wellen im mittleren Bereich 4b mit reduziertem Außendurchmesser, jedoch kleiner als derjenige der Wellen 6a, 6b. So bilden diese zwei mittelgroßen Wellenberge 6c, 6d einen abgestuften Axialanschlag für das Dämpfungselement 5, wodurch beispielsweise die Balgeigenschaften kontinuierlich vom Bereich 4b mit reduziertem Außendurchmesser in den Bereich der radial vorstehenden Wellenberge 6a, 6b unter Zwischenschaltung der genannten Wellenberge 6c, 6d mit mittelgroßem Außendurchmesser übergehen, so dass der Balg ein gleichmäßigeres Schwingungs- und Beweglichkeitsverhalten in diesem Übergangsbereich verglichen mit der Ausführungsform aus Figur 2 aufweist.

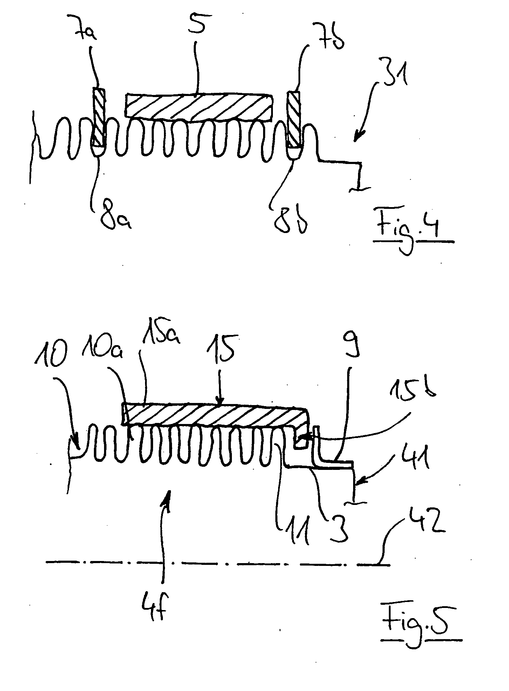

Figur 4 zeigt einen Balg 31 mit über die gesamte axiale Länge des Balgs gleich bleibenden Wellenprofilen. Zur axialen Lagefixierung des Dämpfungselements 5 sind hier zwei Ringelemente 7a, 7b vorgesehen, die beispielsweise aus Seegerringen bestehen können und von außen in ein Wellental 8a, 8b eingesteckt werden und zwischen den jeweiligen zum Wellental 8a, 8b benachbarten Wellenbergen gehalten werden. Die beiden Sicherungsringe 7a, 7b sind so angeordnet, dass das Dämpfungselement demgegenüber ein gewisses Axialspiel aufweist, um sich in Axialrichtung etwas bewegen zu können, was insbesondere bei angularen Bewegungen des Balgs wichtig ist, bei denen ansonsten das Dämpfungselement einen Anschlag für die Ringelemente 7a, 7b bilden würde.

In gleicher Weise ist auch bei den Ausführungsformen gemäß der Figuren 1 bis 3 und auch bei der nachfolgend beschriebenen Ausführungsform gemäß Figur 5 ein Axialspiel für das Dämpfungselement 5 vorgesehen.

In Figur 5 ist ein Balg 41 dargestellt mit einer Endhülse 9 mit L-förmigem Axialquerschnitt, wobei die Endhülse 9 auf dem zylindrischen Anschlussende 3 des Balgs 41 angeordnet ist. Der Balg 41 weist eine Vielzahl gleichförmig ausgebildeter Wellen 10 auf und ist auf seiner radialen Außenseite in einem Teilbereich 4f mit einem Drahtpressring 15 versehen, der die Wellenberge 10a im Bereich 4f beaufschlagt. Der Drahtpressring weist im Axialschnitt ein L-förmiges Profil auf und besteht hierbei aus einem sich parallel zur Balgachse 42 erstreckenden Schenkel 15a und einem sich senkrecht zur Balgachse 42 erstreckenden Schenkel 15b, der in einen Axialbereich 4g zwischen Endhülse 9 und erster Welle 11 des Balgs 41 eintaucht. Auch wenn in diesem Fall die Endhülse 9 denselben Außendurchmesser aufweist, wie die Wellenberge 10a des Balgs 41, so sorgt der abgewinkelte L-Schenkel 15b des Drahtpressrings für die gewünschte Verschiebesicherung in Axialrichtung.

Zusammenfassend wird unter Verwendung einfachster Maßnahmen gewährleistet, dass beim erfindungsgemäßen flexiblen Leitungselement das Dämpfungselement dauerhaft auf dem Balg in dem für dieses vorgesehenen Bereich verbleibt, um die Balgbedämpfung in der gewünschten Art und Weise zu gewährleisten und dies auch noch über einen größeren Zeitraum, was auch zu einer Vergrößerung der Lebensdauer des gesamten flexiblen Leitungselements führt.

## Patentansprüche

1. Flexibles Leitungselement zum Transport von gasförmigen Materialien und insbesondere für Abgasanlagen von Kraftfahrzeugen, zumindest bestehend aus einem gewellten Balg aus Metall und einem koaxial zum Balg auf dessen radialer Außenseite angeordneten ringförmigen Dämpfungselement, dass sich nur über einen axialen Teilbereich des Balgs erstreckt, **dadurch gekennzeichnet,**
**dass** das ringförmige Dämpfungselement (5, 15) aus einem Drahtpressring besteht, welcher bezogen auf die Axialrichtung des Balgs (1, 11, 21, 31) formschlüssig und durch an der radialen Außenseite des Balgs (1, 11, 21, 31) vorgesehene bewegungsbegrenzende Haltelemente (6a, 6b, 6c, 6d, 7a, 7b) verliersicher am Balg gehalten ist.

2. Flexibles Leitungselement nach Anspruch 1,
**dadurch gekennzeichnet,**
**dass** der axiale Abstand der Halteelemente (6a - 6d, 7a, 7b) größer ist als die axiale Länge des Dämpfungselements (5).

3. Flexibles Leitungselement nach Anspruch 1,
**dadurch gekennzeichnet,**
**dass** die Haltelemente (7a, 7b) aus zusätzlichen, den Balg (31) auf seiner radialen Außenseite beaufschlagenden und in Radialrichtung nach außen vorstehenden Ringelementen bestehen, insbesondere aus Seegerringen.

4. Flexibles Leitungselement nach Anspruch 1,
**dadurch gekennzeichnet,**
**dass** die Halteelemente (6a, 6b, 6c, 6d) aus in Radialrichtung gegenüber den benachbarten, vom Dämpfungselement (5) beaufschlagten Balgwellen vorstehenden Balgwellen gebildet sind.

5. Flexibles Leitungselement nach Anspruch 1,
**dadurch gekennzeichnet,**
**dass** zumindest eines der beiden Halteelemente für das Dämpfungselement (15) aus einem das Balgende beaufschlagenden Endring oder einer Endhülse (9) besteht.

## Claims

1. Flexible duct element for transporting gaseous materials and especially for exhaust systems of motor vehicles, at least consisting of a corrugated bellows made of metal and an annular damping element arranged coaxially with respect to the bellows on the radial outer side thereof, which damping element extends over only an axial sub-region of the bellows,
**characterised in that**
the annular damping element (5, 15) consists of a compressed wire ring which, relative to the axial direction of the bellows (1, 11, 21, 31), is held captively on the bellows by interlocking and by means of movement-limiting holding elements (6a, 6b, 6c, 6d, 7a, 7b) provided on the radial outer side of the bellows (1, 11, 21, 31).

2. Flexible duct element according to claim 1,
**characterised in that**
the axial spacing of the holding elements (6a - 6d, 7a, 7b) is greater than the axial length of the damping element (5).

3. Flexible duct element according to claim 1,
**characterised in that**
the holding elements (7a, 7b) consist of additional ring elements which act upon the bellows (31) on its radial outer side and which project outwards in the radial direction, especially Seeger rings.

4. Flexible duct element according to claim 1,
**characterised in that**
the holding elements (6a, 6b, 6c, 6d) are formed from bellows corrugations which project in the radial direction relative to the adjacent bellows corrugations that are acted upon by the damping element (5).

5. Flexible duct element according to claim 1,
**characterised in that**
at least one of the two holding elements for the damping element (15) consists of an end ring, which acts upon the end of the bellows, or of an end sleeve (9).

## Revendications

1. Elément de conduite flexible conçu pour l'acheminement de substances gazeuses et notamment destiné à des systèmes d'échappement de véhicules automobiles, composé au moins d'un soufflet métallique annelé et d'un élément annulaire d'amortissement disposé coaxialement audit soufflet, sur la face extérieure radiale de ce dernier, et s'étendant uniquement sur une région partielle axiale dudit soufflet,
**caractérisé par le fait**
**que** l'élément annulaire d'amortissement (5, 15) est constitué d'une bague en fil métallique comprimé qui est retenue par complémentarité de formes vis-à-vis de la direction axiale du soufflet (1, 11, 21, 31) et est arrêtée sur ledit soufflet, de manière imperdable, par l'intermédiaire d'éléments de retenue (6a, 6b, 6c, 6d, 7a, 7b) limitateurs de mouvement, prévus sur la face extérieure radiale dudit soufflet (1, 11, 21, 31).

2. Elément de conduite flexible selon la revendication 1,
**caractérisé par le fait**
**que** l'espacement axial des éléments de retenue (6a - 6d, 7a, 7b) est plus grand que la longueur axiale de l'élément d'amortissement (5).

3. Elément de conduite flexible selon la revendication 1,
**caractérisé par le fait**
**que** les éléments de retenue (7a, 7b) sont constitués par des segments annulaires additionnels, notamment des anneaux de retenue, qui font saillie vers l'extérieur dans le sens radial et sollicitent le soufflet (31) sur sa face extérieure radiale.

4. Elément de conduite flexible selon la revendication 1,
**caractérisé par le fait**
**que** les éléments de retenue (6a, 6b, 6c, 6d) sont formés par des ondulations de soufflet faisant saillie, dans le sens radial, par rapport aux ondulations de soufflet voisines sollicitées par l'élément d'amortissement (5).

5. Elément de conduite flexible selon la revendication 1,
**caractérisé par le fait**
**qu'**au moins l'un des deux éléments de retenue, affectés à l'élément d'amortissement (15), est constitué par une bague extrême ou par une douille extrême (9) sollicitant l'extrémité du soufflet.
